(19) Europäisches Patentamt
European Patent Office
Office européen des brevets

(11) **EP 2 637 438 A1**

(12) **EUROPEAN PATENT APPLICATION**

(43) Date of publication:
**11.09.2013 Bulletin 2013/37**

(51) Int Cl.:
*H04W 24/10* (2009.01)    *H04B 7/02* (2006.01)

(21) Application number: **12305282.1**

(22) Date of filing: **09.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Boccardi, Federico**
**20063 Cernusco Sul Naviglio (MI) (IT)**

• **Baracca, Paolo**
**37047 San Bonifacio (VR) (IT)**
• **Braun, Volker**
**70176 Stuttgart (DE)**
• **Tulino, Antonia Maria**
**Lincroft, NJ New Jersey 07738 (US)**

(74) Representative: **2SPL Patentanwälte**
**Postfach 15 17 23**
**80050 München (DE)**

(54) **Apparatus and Method for Communicating with a First Transmission Point and with a Second Transmission Point and Apparatus and Method for Coordinating a Downstream Transmission from a First and a Second Transmission Point**

(57)    An apparatus (4) for a mobile transceiver (10; 24) for communicating with a first transmission point (2a) via a first radio channel (6a) and with a second transmission point (2b) via a second radio channel (6b), the first transmission point (2a) and the second transmission point (2b) being members of a set of transmission points used for measurements, comprises a quality estimator (16) operable to determine information on a quality of the first radio channel (6a) and of the second radio channel (6b) and an evaluator (12) operable to evaluate the information on the quality of the first radio channel (6a) and of the second radio channel (6b) to derive a preferred use of the first and second radio channels (6a, 6b). A transmitter (16) is operable to transmit a channel feedback information to the first or to the second transmission point (2a, 2b), the channel feedback information indicating the preferred use.

Fig. 2

**Description**

Embodiments of the present invention relate to mobile communication, more particularly but not exclusively to coordinating communication with multiple transmission points.

**Background**

In mobile communication networks, such as for example in 3<sup>rd</sup> Generation (3G) or in 4<sup>th</sup> Generation networks (4G), great effort is undertaken to increase the throughput of data that can be exchanged with multiple mobile user equipments (UEs) sharing the radio resources available for one or multiple cells of the network. One cell or one transmission point serves multiple users such that the multiple users served by one cell or by one single transmission point need to share the available radio resource. One single base station, also denoted as NodeB or eNodeB, may serve multiple remote radio heads, antennas or antenna arrays, each of the antennas or of the antenna arrays being utilized to send data to and to receive data from a particular area. Several mobile units communicating simultaneously with the same antenna or the same antenna array share the radio resource or the available radio channels of the antenna.

In this respect, the term transmission point shall in the following be understood to be a device or an entity with which user equipments of the network communicates via a radio channel, such that all user equipments communicating with the same transmission point share the radio resource or available radio channels. That is, the user equipments communicating with the same transmission point potentially interfere with each other in terms of bandwidth, cross-talk or the like. Apart from that potential interference, which can be handled by the serving transmission point alone, also two or more radio channels provided by two or more transmission points may interfere with each other at the location of user equipment or a mobile such as to decrease the achievable data rate for that user equipment. Such interference typically occurs at the border of the areas irradiated or served by neighboring transmission points, that is, at the borders of the areas or cells associated to the transmission points.

In order to account for the problem of such inter-transmission point interference and/or to increase the throughput of an existing network infrastructure, Coordinated MultiPoint (CoMP) transmissions may be performed. In order to do so, two or more transmission points within a cluster of transmission points may share the information about the quality and the signaling parameters of some or of all of the UEs communicating via the individual transmission points of the cluster. Various approaches exist to enhance a network's efficiency or throughput by employing CoMP transmission in the uplink as well as in the downlink. Among these, for example, coordinated scheduling/beam forming for the downlink where user data is only available or transmitted at one transmission point, the so-called serving transmission point or serving cell, but user scheduling and beam forming decisions are made with coordination among the individual transmission points of a cluster. In joint processing CoMP user data is transmitted to user equipment via multiple transmission points. The so called joint transmission achieves an enhancement of the throughput by transmitting data of a data channel to one single user equipment simultaneously via multiple transmission points.

All coordinated multipoint downlink implementations, however, require the knowledge of the transmission characteristics or the quality of the radio channels between all transmission points in the cluster potentially serving a particular user equipment and the respective user equipment. The transmission points being monitored by a user equipment and hence serve as candidates for establishing a downlink transmission are in the following also called the set of transmission points used for measurements. To this end, the user equipment is required to feed back some channel state information feedback to the transmitter side. In the particular example of a Long Term Evolution (LTE) system, for example precoding direction information is transmitted via a Pre- coding Matrix Indicator (PMI), while a Channel Quality Indicator (CQI) corresponds to a preferred Modulation and Coding Scheme (MCS). Enabling the network or some transmission scheduling entity therein to perform scheduling decisions for CoMP in order to exploit the available network bandwidth to a high extent, however, requires that the network or the scheduling entity is continuously informed about the channel state information feedback of all potential radio channels between all transmission points that are a candidate for a downlink transmission to a particular UE. This continuous signaling itself requires a considerable amount of uplink bandwidth, thus leading to a decrease of the efficiency of the network. It is therefore a desire to provide for a possibility to enhance the downlink efficiency or to provide an implementation of a coordinated multipoint transmission scheme for a wireless communication system in an efficient manner.

**Summary**

Embodiments of the present invention achieve this with an apparatus for a mobile transceiver for communicating with a first transmission point via a first radio channel and with a second transmission point via a second radio channel, wherein the first and second transmission points are members of a set of transmission points used for measurements. The apparatus utilizes a quality estimator operable to determine information on a quality of the first radio channel and of the second radio channel and by further incorporating an evaluator operable to evaluate the information on the quality of the first radio channel and of the second radio channel to derive a preferred use of the first and second radio channels. That is, the quality of the channels between multiple transmission points and the user equipment is not only measured and reported but the apparatus for the mobile transceiver or a mobile transceiver itself evaluates the information on the quality of the first radio channel and of the second radio channel to derive a preferred use of the first and the second radio channels.

The apparatus further comprises a transmitter operable to transmit channel feedback information indicating the preferred use to the first transmission point and/or to the second transmission point. The feedback information may, for example, be transmitted to a scheduler or some other entity in the communication network via either one or via both of the transmission points. The network or the scheduler may, for example, be configured such that the preferred use of the available first and second channels is implemented without a change. In other words, a mobile transceiver or a user equipment itself may propose a preferred configuration as to how radio channels for transmission of downlink data shall be configured. This may serve to decrease the bandwidth used for the signaling of channel state information feedback while still leading to highly efficient downstream configurations. This may further increase the achievable throughput and the overall efficiency since the preferred use is determined by the user equipment or an associated apparatus for the mobile transceiver itself. The apparatus or the transceiver may additionally account for its individual transmission characteristics and therefore make an optimal proposal such as to be able to exploit the available bandwidth to a maximum possible extent. The preferred use as determined by an apparatus according to the present invention may hence comprise information on a proposal for a use of the first and the second transmission points for a downlink transmission. The preferred use is determined by evaluating the information on the quality determined for the radio channels and, hence, goes beyond the content of the determined information on the quality itself. Further, the preferred use holds information for the first and the second radio channels in combination. Therefore, the transmitted preferred use differs from the indication of a simple selection of one of a plurality of available transmission points.

The coordination of multipoint transmission may, for example, consider the fact that the better the characteristics or properties of a radio channel are known, the closer one may come to the maximum possible theoretical data rate transmittable via this particular channel. The knowledge on the transmission characteristics of a particular radio channel, however, is reported from the user equipment by the transmission of some feedback or channel state information feedback to the network, such as for example CSI in a LTE Network. This signaling consumes available bandwidth or data rate itself. Having numerous potential radio channels between a single user equipment and multiple transmission points it is, from Shannon's rate distortion theory, intuitive to use more feedback bits or uplink bandwidth for the transmission of an information of a quality of a radio channel for an intrinsically good channel having a good transmission quality than for a poor channel.

By determining a preferred use for the radio channels associated to multiple transmission points at the user equipment and by using a single codebook for each transmission point, the storing of very large codebooks may be avoided as compared to an alternative approach, where the signal characteristics of all radio channels between each transmission point used for measurements and the user equipment is signaled by means of a single code word.

This may furthermore avoid a change of the codebook on every change of the number of cooperating transmission points, that is, when the number of transmission points used for measurements varies. Furthermore, a redesign of the codebooks may be avoided when the user equipment moves to another position in the network, which may otherwise be caused by the then differing channel energies of the different transmission points of the set used for measurements. Similarly, a dynamic switching between codebooks designed for the single transmission point mode and the cooperative multipoint mode of operation may be avoided, which would consume further resources.

According to some embodiments, an apparatus for a mobile transceiver may transmit channel state information feedback on the quality of the first and of the second radio channels as well as the information on the preferred use of the first and the second radio channels, wherein the channel state information feedback is adapted to the preferred use. That is, the channel state information feedback giving a feedback of the individual radio channels may already be adapted to the preferred use as determined by the apparatus for a mobile receiver. This may lead to a further increase of the efficiency of the achievable downlink data rate without simultaneously consuming part of the efficiency by an increased signaling overhead due to the fact that a feedback of channel state information or of channel state information feedback may be required for multiple transmission points in a coordinated multipoint transmission mode of operation. Given, for example, the constraint of a maximum number of affordable bits for the transmission of the channel state information feedback for multiple transmission points, it may, motivated by Shannon's rate distortion theory, be advisable to invest more feedback bits for good radio channels than for poor radio channels. Particularly for a LTE-system, it may be appealing to invest more bits for the transmission of pre-coding matrix indicators of cells corresponding to stronger radio channels, which is to radio channels having a better determined quality. For example, in LTE- systems, transmission points having their channel state information feedback reported using a larger amount of bits may use a larger codebook. Therefore, channel state information feedback can be submitted with a higher accuracy which in turn leads to a better pre-coding for the transmission over the radio channel and hence to a higher achievable data rate.

Quality in terms of the present document may be understood to be any possible physical or logical quantity suitable to describe a quality of a radio channel, for example, a capability of transmitting data at a high rate and/or with small error rates. Examples for quality in that sense are signal to noise ratios or block error rates or the like. In some embodiments the channel state information feedback on the quality of the radio channels may include a phase information. For example, this could be a phase difference between the two transmission points. In other embodiments, the phase information may be implicitly included in the PMI. The particularly implemented option shall be known to both transmitter and receiver, and could, for example, be predefined by standard.

According to some embodiments of the invention, the channel feedback information, therefore, comprises information on a proposed distribution of bits within a number of available bits for a transmission of a channel state information feedback on the quality of the first and of the second radio channels. That is, the proposed distribution of bits indicates a first number of bits to be used to transmit the channel state information feedback for the first channel and a second number of bits to be used to transmit the channel state information feedback for the second channel. In particular, under a constraint of a total of B feedback bits for the transmission of the channel state information feedback, as for example PMI, a user equipment or an associated apparatus according to an embodiment of the present invention may send b1 bits for a radio channel associated with a first transmission point and b2 bits for a radio channel associated with a second transmission point, with b1 + b2 = B. When at the same time determining a preferred use and thus, for example, proposing a number of selected transmission points to be used for transmission, an apparatus or a user equipment according to an embodiment of the present invention may utilize the downlink bandwidth to a maximum possible extent. In the following, the term set of transmission points used for transmission denotes the group of transmission points which are in fact transmitting data in a downlink to a user equipment. According to some embodiments of the invention, the channel state information feedback includes the precoding matrix indicator PMI indicating a preferred precoding matrix for a downstream transmission over each of the first and second radio channels, wherein the channel feedback information indicates the distribution of bits for the transmission of the preferred precoding matrix indicator only. That is, even when additional information or parameters may be transmitted as channel state information feedback, bits are distributed for the transmission of the preferred precoding matrix indicator only.

The transmission of the preferred use for the transmission points and hence the possibility to, e.g., propose a particular set of transmission points used for transmission may increase the achievable downlink bandwidth even more as compared to alternative approaches where the number of available feedback bits may be distributed between different transmission points, while the number of transmission points used for transmission, that is the ones having an established radio channel with the user equipment in order to transmit payload data, remains fixed and determined by the network. When a fixed number of transmission points for transmission is assigned to a user equipment without providing the possibility to signal a preferred use of the transmission points, the user equipment is always receiving payload data from the transmission points in the network, even if the user equipment may not provide channel state information feedback to the network. The parallel transmission of the preferred use may hence avoid scenarios, where it does not make any sense to assume transmission/reception from transmission points in the network which are far apart from the user equipment. The static approach may furthermore make it impossible to align the transmissions from different transmission points without costly phase alignment. Furthermore, the occurrence of CQI errors arising when transmitting CQIs to far apart transmission points may be avoided by utilizing embodiments of the present invention.

According to some embodiments, a distributed number of bits for the transmission of channel state information feedback is proposed such that a high number of bits is used for a radio channel having a determined better quality than for a radio channel having a determined lower quality. According to some embodiments, an apparatus according to an embodiment of the present invention may provide or transmit channel feedback information that indicates a proposal to exclude the first or the second transmission point from a set of transmission points used for transmission in order to provide for a better downlink data rate.

According to some embodiments, the channel feedback information may also indicate a proposal for a combined transmission via a first and a second radio channel. Also, a further channel may be proposed to be included into the set of transmission points used for transmission or the preferred use of a combined transmission via the first and second transmission points may be altered or modified.

According to some embodiments, the control for the scheduling may be transferred from the network to the apparatus or to the user equipment comprising a respective apparatus such that the network generally accepts the proposal transmitted in the channel feedback information. According to further embodiments, however, the proposals have to be acknowledged by a responsible entity in the network, that is, for example, by an apparatus for coordinating a downstream transmission from a first and a second transmission point to a mobile transceiver.

To this end, such an apparatus may comprise a receiver which is operable to receive a channel feedback information from a mobile transceiver which indicates a preferred use of the first and second radio channels as determined by the mobile transceiver. The apparatus may furthermore comprise a scheduler which is operable to evaluate the channel feedback information and to determine the actual use of the first and the second radio channels based on the received preferred use. That is, the apparatus for coordinating the downstream transmission may acknowledge the proposal and configure or implement the first and second transmission points such that they provide data to the mobile transceiver by following the proposal for the preferred use, that is, by implementing the preferred use of the associated transmission points. To the contrary, however, the apparatus for coordinating the downstream transmission may also disregard the proposal for various reasons and signal its decision to the mobile transceiver, for example by means of a negative acknowledgement . Alternatively, the mobile transceiver may also implicitly derive the deviation from its proposal, for example by the evaluation of pilot signals or the like. For example, when the network is crowded, a proposal to further restrict the set of transmission points used for transmission, that is, to exclude particular transmission points from the set of transmission points used for transmission may be disregarded to not harm the efficiency of data transmission. A proposed exclusion from the set of transmission points used for transmission may be signaled explicitly by the apparatus for a mobile transceiver or signaled implicitly. That is, the apparatus for coordinating a downstream transmission may conclude itself according to some quality criterion or according to a quality threshold applied to the preferred use, whether it is advisable to exclude a transmission point from the set of transmission points used for transmission or to add a further transmission point to the set of transmission points used for transmission.

Some embodiments comprise a digital control circuit installed within the apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

## Brief description of the Figures

Some embodiments of apparatuses and/or methods will be described in the following by way of example only, and with reference to the accompanying figures, in which

Fig. 1     is a principal sketch of a network environment comprising an embodiment of an apparatus for coordinating a downstream transmission from two transmission points to a mobile transceiver;

Fig. 2     shows an embodiment of an apparatus for a mobile transceiver communicating with a first transmission point via a first radio channel;

Fig. 3     is a principal sketch of a network environment implementing an embodiment of the present invention;

Fig. 4     shows a distribution of bits for a transmission of channel state information feedback within the network environment of Fig. 3;

Fig. 5     is a flow chart of an embodiment of a method for communicating with a first transmission point via a first radio channel and with a second transmission point via a second radio channel; and

Fig 6     is a flow chart of an embodiment of a method for coordinating a downstream transmission from a first transmission point and from a second transmission point to at least one mobile transceiver via a first radio channel and a second radio channel.

## Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

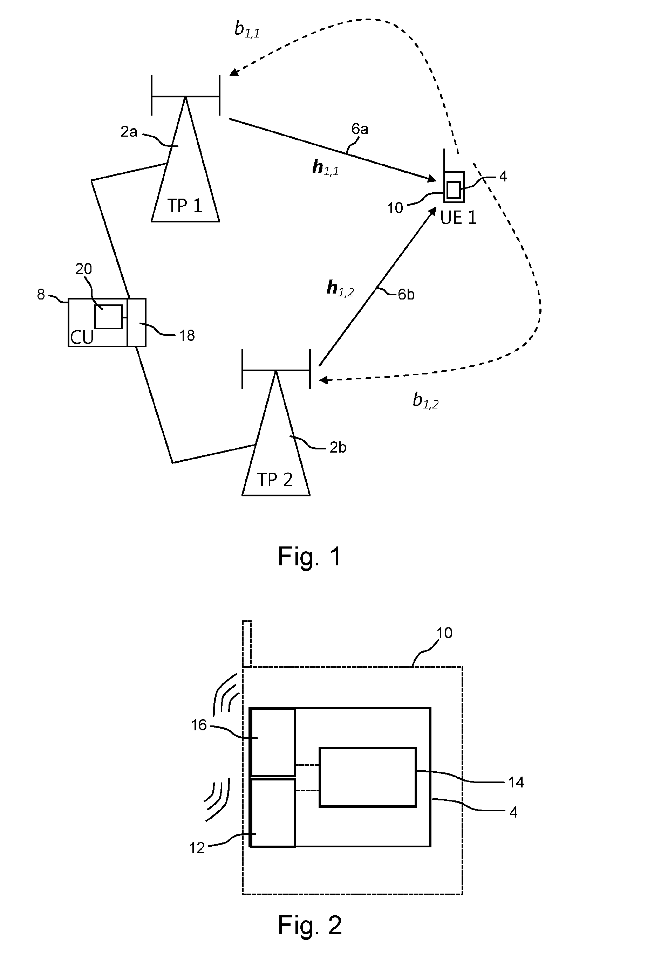

Fig. 1 shows a principle sketch of a network environment having two transmission points, the first transmission point 2a and the second transmission point 2b and a user equipment 10 comprising an apparatus for a mobile transceiver 4 which is, in principle, capable of communicating with the first transmission point 2a and with the second transmission point 2b. In particular, the apparatus for the mobile transceiver 4 or the user equipment 10 may communicate downstream with the first transmission point 2a via a first radio channel 6a ($h_{1,1}$) and with the second transmission point 2b via a second radio channel 6b ($h_{1,2}$). The apparatus 4 or the user equipment 10 comprising the apparatus may hence receive payload data in the downlink via radio channel 6a from the first transmission point 2a and in the downlink via radio channel 6b from the second transmission point 2b. The first and second transmission points 2a and 2b are coupled to an apparatus 8 for coordinating a downstream transmission from the first transmission point 2a and the second transmission point 2b to the user equipment 10 or to the apparatus for a mobile transceiver 4. For conciseness and clarity of understanding, only two transmission points are shown in Fig. 1, which are in principle capable of operating as set of transmission points used for transmission to jointly transmit payload data via radio channels 6a and 6b. Of course, further embodiments of the present invention may employ or utilize more transmission points in the set of transmission points used for transmission or in the set of transmission points used for measurement. That is, the number of transmission points considered can in principle be arbitrary and in particular be higher than two or four. According to some embodiments, the number of transmission points used for measurement or for transmission may also be restricted by the apparatus 8, capable of sending a corresponding message to the apparatus 4.

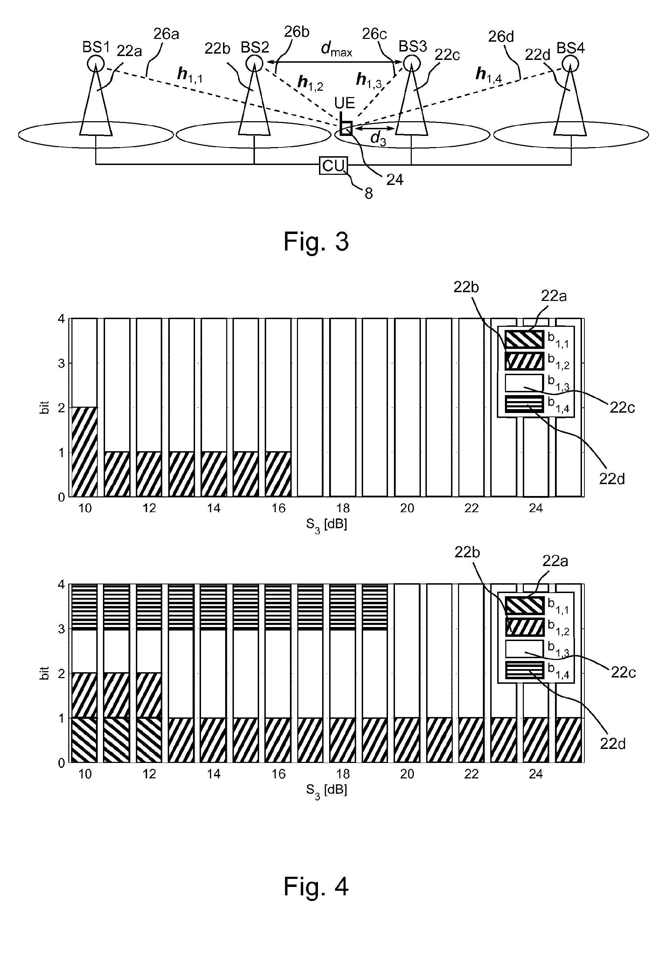

The user equipment 10 comprises an embodiment of an apparatus for a mobile transceiver 4 as shown in Fig. 2. The functionality of the apparatus for a mobile transceiver of Fig. 4 and of the apparatus 8 for coordinating the downstream transmission from the first and the second transmission points 2a and 2b will in the following be explained jointly with reference to Figs. 1 and 2. Generally, the apparatus 4 for a mobile transceiver is further capable of transmitting channel feedback information in an uplink to either a single one of the transmission points 2a and 2b or to both of them simultaneously, such as to provide for the possibility to transmit channel feedback information about the radio channels 6a and 6b to the apparatus for coordinating the downstream transmission 8.

Generally, the apparatus 4 for a mobile transceiver may be implemented within a UE or a mobile 10, as for example indicated schematically in Fig. 2. Of course, the apparatus 4 may be implemented within any kind of mobile transceiver or user equipment capable of communicating with the first and second transmission points 2a and 2b, such as for example, mobiles, data sticks or surf sticks to be connected to computer or tablet PC devices, tablets or PCs incorporating radio interfaces to exchange data and the like. The apparatus 4 may be implemented into the circuitry of a chip of the mobile transceiver or running as a software implementation on a processor within the mobile transceiver just to name two possible implementations. Furthermore, it is of course also possible to implement the apparatus 4 as a separate hardware device or chip such as to enhance the functionality of already existing mobile transceivers with a new chip.

The apparatus for a mobile transceiver 4 comprises a quality estimator 12 operable to determine information on a quality of the first radio channel 6a and of the second radio channel 6b, such as, for example, a signal-to-noise ratio of the channel, block error rates of symbols transmitted over the channel or any other kind of information indicating a quality of the channel and/or an estimate of the amount of data transmittable via the channel.

The apparatus 4 further comprises an evaluator 14 which is operable to evaluate the determined information on the quality of the first radio channel 6a and the second radio channel 6b such as to derive a preferred use of the first and the second radio channels 14. That is, the evaluator 14 associated with the mobile transceiver or the user equipment 10 may consider both determined quality informations at a time such as to propose or to derive a preferred use of the first and second radio channels 6a and 6b. The apparatus 4 further comprises a transmitter 16 which is operable to transmit a channel feedback information to the first or to the second transmission point 2a and 2b, the channel feedback information indicating the derived preferred use, such as to enable the apparatus for coordinating the downstream transmission 8 to consider this information.

To this end, the information on the preferred use may be jointly transmitted via either the first transmission point 2a or the second transmission point 2b or jointly via both transmission points 2a and 2b. The transmission enables the apparatus for coordinating a downstream transmission 8 to receive and consider this information. As a matter of fact, further embodiments of the present invention may also utilize a separate direct channel for the communication with the apparatus for coordinating a downstream transmission 8.

The signaling of the preferred use may, for example, indicate that transmission via one of the two transmission points 2a or 2b is preferred, since the determined quality for the radio channels 6a and 6b gives rise to the assumption that an overall downlink bit rate may be increased by a particular configuration. To the contrary, the preferred use may also indicate a proposal to exclude one of the first or the second transmission points 2a and 2b from the set of transmission points used for transmission of data to the user equipment 4. Such signaling could, for example, be explicit or implicit, the implicit signaling being elaborated in one of the following paragraphs with respect to the apparatus for coordinating a downstream transmission 8. Explicit signaling could, for example, be performed by introducing a particular bit at a predetermined position or a particular code word in an upstream transmission of the apparatus 4 such as to signal to the apparatus for coordinating the downstream transmission 8 to perform or initiate the exclusion of one of the transmission points from the set of transmission points used for transmission. Channel feedback information allowing to implicitly signal the exclusion of one of the transmission points from the cluster may, for example, be the transmission of a proposed distribution of bits within a number of available bits for a transmission of a channel state information feedback of the first and of the second radio channels 6a and 6b. That is, the apparatus 4 may evaluate and provide a preferred use of the two radio channels 6a and 6b such that a proposal for a distribution of bits of a feedback of channel state information feedback is performed. For example, when a total number B of available bits is eight, the apparatus 4 may propose to utilize three bits for the use of the transmission of the channel state information feedback for a first channel and the remaining five bits for the transmission of the channel state information feedback for the second channel. Implicit signaling of a proposal to exclude the first or the second transmission points may then be performed by applying a threshold to the proposed bits at the apparatus 8 such as to conclude that a transmission point having associated therewith a number of proposed bits below a predetermined threshold should be excluded from the set of transmission points used for transmission in order to enhance overall system performance.

For example, when the use of zero bits is proposed for a particular channel or a particular transmission point, the apparatus 8 for coordinating the downstream transmission may decide to exclude this particular channel from the set of transmission points used for transmission.

The apparatus for coordinating the downstream transmission 8 comprises a receiver 18 operable to receive a channel feedback information from the at least one mobile transceiver, the channel feedback information indicating a preferred use of the first and second radio channels, as determined by the apparatus 4. The apparatus for coordinating the downstream transmission 8 further comprises a scheduler 20 operable to evaluate the channel feedback information and to determine a use of the first and second radio channels based on the received preferred use. That is, the scheduler 20 may, for example, evaluate implicit signaling of a proposed exclusion of a transmission point. In general, it evaluates the received proposal for the preferred use and determines an actually implemented use of the two channels.

In order to further increase the overall performance of the network, the apparatus 8 may furthermore comprise an optional transmitter operable to transmit selection information to the at least one mobile transceiver 10, the selection information indicating a criterion to be applied for selecting the transmission points included in the set of transmission points used for measurements. For example, the apparatus 8 may define a maximum number of transmission points to be considered by the mobile transceiver for determining the set of transmission points used for measurements or transmission, so as to, for example, restrict the maximum number of transmission points when the network or the cells served by the transmission points are only sparsely populated, while a larger number of transmission points may be signaled when the network is densely populated, such as to influence the selection or the evaluation of the preferred use of the apparatus 4 with the aim of increasing the maximum network performance. To this end, the selection information may indicate a maximum number of allowable transmission points in the set used for transmission and/or measurement. In further embodiments, the selection information may indicate an anchor transmission point to be used for transmission and an associated threshold for a determined quality of a radio channel. Further transmission points or transmission points serving as an alternative to the anchor transmission point may then only be proposed or included in the set of transmission points used for measurements when the threshold is met by a further transmission point. In further embodiments, the selection information may indicate a particular type or quality of service, as for example video or audio transmission. In further embodiments, the selection information may indicate different user classes to be preferred such as to include further transmission points for preferred users.

Two particular embodiments as to how a distribution of bits within a total number of available bits for a transmission of channel state information feedback in an uplink will be described in the following paragraphs and with respect to Figs. 3 and 4.

Fig. 3 shows an exemplary simplified radio or wireless network with four transmission points 22a to 22d, whereas Fig. 4 shows the result of the two embodiments, that is, the distribution of bits used for a transmission of channel state information feedback for the four individual transmission points 22a to 22d. Fig. 3 further illustrates a user equipment 24 comprising an apparatus 4 or a mobile transceiver as illustrated in Fig. 2. The user equipment 24 is capable of communicating with the four transmission points 22a to 22d via radio channels 26a to 26d, respectively. The bits proposed for signaling channel state information feedback for the individual transmission points 22a to 22d are illustrated in Fig. 4, wherein the upper figure shows the proposed preferred use of bits according to the first particular embodiment or algorithm, wherein the lower figure shows the proposed use of bits according to the second particular embodiment or algorithm. The proposed distribution of bits is illustrated depending on the average signal-to-noise ratio (SNR) between the user equipment 24 and the third transmission point 22c, which may also be interpreted as a measure for the distance between the user equipment 24 and the transmission point 22c. As illustrated in Fig. 3, the final scheduling decision may be taken by an apparatus for coordinating a downstream transmission 8. However, Fig. 4 directly illustrates the proposal for the preferred use, that is, the proposed distribution of bits $b_{k,j}$ within the number of available bits B, which are in this particular example only four bits.

For the following considerations, which illustrate the concept with respect to a Long Term Evolution (LTE) network, the following notation is used: We use $(\cdot)^T$ to denote transpose, $(\cdot)^*$ complex conjugate and $(\cdot)^H$ conjugate transpose, $\mathbf{I}_M$ the identity matrix of size M and $x^{(d)}$ = x/||x|| denotes the direction of vector x.

Before turning to the particular embodiments, the following general considerations are introduced, which apply to both of the embodiments. We consider a downlink scenario with J Transmission Points (TP) each equipped with M antennas transmitting towards K single antenna UEs. We indicate with $h_{k,j}$ the zero-mean complex Gaussian vector of size M×1 between UE k and TP j with covariance matrix $\sigma_{k,j}^2 \mathbf{I}_M$ and with

$$\boldsymbol{h}_k = \left[\boldsymbol{h}_{k,1}^T, \boldsymbol{h}_{k,2}^T, ..., \boldsymbol{h}_{k,J}^T\right]^T$$

the vector collecting the channels between UE k and all the TPs. We consider that TPs are perfectly synchronized in time and frequency and each TP is connected by a free-errors and zero-delay backhaul link to a Central Unit (CU) that allows full sharing of data and Channel State Information (CSI) as a particular example of channel state information feedback among all TPs. As TPs are in general not co-located, we also impose a maximum power $\overline{P}$ available at each TP. We assume that each UE has a limited number of feedback bits B to send back the Precoding Matrix Indicator (PMI) and employs per-cell codebooks. Of course, the same considerations also apply for scenarios, where the bits are used for other feedback information, or more generally, for any kind of channel state information feedback. The feedback bits B is thus the available number of bits for the transmission of a channel state information feedback. In detail, each UE agrees with the TPs on a set of B codebooks $C^{(b)}=\{\mathbf{c}_1, \mathbf{c}_2, ..., \mathbf{c}_{2b}\}$, b = 1, 2, ... ,B, where each codeword $C_j$ is a unit-norm vector of size M ×1, i.e codewords' size is equal to the size of vector $h_{k,j}$. The developed feedback technique comprises two main phases.

Phase one may be denoted as soft TP association. Based on an estimate of the large scale fading, UE k allocates $b_{k,j}$ bits to quantize channel $\mathbf{h}_{k,j}^{(d)}$ with

$$\sum_{j=1}^{J} b_{k,j} = B, \quad (1)$$

and communicates these values to the TPs. That is, the distribution of the bits $b_{k,j}$ indicates the proposed distribution of bits within the number of available bits for the transmission of the channel state information feedback.

Note that this optimization requires to be updated only when the values of $\sigma_{k,j}^2$ significantly change, for instance because the UE is moving to another position, and sets codebook $C^{(b_{k,j})}$ for UE k to represent channel $\mathbf{h}_{k,j}^{(d)}$. Moreover, this bit allocation defines the transmission point set related, that is the set of transmission points used for transmission, to UE k, which turns out to be $J_k = \{j = 1, 2, ..., J : b_{k,j} > 0\}$. That is, not allocating a bit for a particular TP may serve to explicitly or implicitly propose to exclude a TP from a set of transmission points used for transmission.

Phase two may be denoted as Feedback transmission. The instantaneous value of the channel varies because of fast fading and we assume that UE k perfectly estimates channel $\mathbf{h}_k$ by using pilot signals transmitted by the J TPs, computes and feeds back PMI and Channel Quality Information (CQI). Then, based on this information, the CU schedules a subset of the K UEs that perform downlink transmission, which is the set of transmission points used for transmission.

By considering a low-mobility scenario, the uplink bandwidth used by UE k to communicate $b_{k,j}$, that is the proposed distribution of bits within the number of available bits, to the TPs is negligible with respect to the bandwidth used for PMI and CQI feedback. In the following we indicate with

$$\hat{\boldsymbol{h}}_k = \left[\hat{\boldsymbol{h}}_{k,1}^T, \hat{\boldsymbol{h}}_{k,2}^T, \ldots, \hat{\boldsymbol{h}}_{k,J}^T\right]^T$$

the channel reconstructed at the CU on the basis of the feedback sent by UE k where $\mathbf{h}_{k,j}$ is the reconstructed channel between UE k and TP j. As the CU may further need to know the relative amplitudes of channels between a UE and each TP, we assume that a set of CQIs is reported by UE k to allow the CU to reconstruct the set of amplitudes $\{\|h_{k,j}\| : b_{k,j} > 0, j=1,2,\ldots,J\}$. The design of CQI feedback is beyond the scope of this particular embodiment and considers that CQIs are reported without errors. After jointly selecting the codewords, UE k sends the related indexes together with the CQIs to the TPs.

In the following we propose two particular embodiments to allocate the feedback bits $b_{k,j}$, j=1,2,...,J, depending on the large scale fading $\sigma_{k,j}^2$, $j=1,2,\ldots J$, and based on the following further assumptions:

1. All the TPs to whom UE k sends a feedback employ Maximum Ratio Transmission (MRT) in serving only this UE by observing per-TP power constraint $\bar{P}$.

2. Bits are allocated with the aim of maximizing the average Signal to Noise Ratio (SNR), which is one particular example for an averaged quality criterion to be satisfied for a downstream transmission over the radio channels associated to the proposed TPs.

3. Random Vector Quantization (RVQ) is the criterion used to design codebooks, i.e. each codeword is independently chosen from the isotropic distribution on the unit sphere.

4. UE independently chooses the best codeword for each link, i.e. for j=1,2,...,J,

$$\hat{\boldsymbol{h}}_{k,j}^{(d)} \approx \arg\max_{\boldsymbol{w} \in C^{(b_{k,j})}} \left|\boldsymbol{w}^H \boldsymbol{h}_{k,j}^{(d)}\right|.$$

The result of the following first particular embodiment is illustrated in Figure 4, upper graph. Let us define the function

$$\mathbf{1}(b_{k,j}) = \begin{cases} 1, & b_{k,j} > 0 \\ 0, & b_{k,j} = 0 \end{cases},$$

that is a function only considering transmission points for which the proposed number of bits is at least one. Since no transmissions are assumed towards the other UEs, no interference arises. Note that assumptions 3 and 4 provide that phase $\angle\left(\mathbf{h}_{k,j}^{(d)H} \hat{\mathbf{h}}_{k,j}^{(d)}\right)$ is uniformly distributed in the interval [0,2π] and is independent of $\angle\left(\mathbf{h}_{k,i}^{(d)H} \hat{\mathbf{h}}_{k,i}^{(d)}\right), \forall j \neq i$.

Therefore, the average SNR at the UE k is proportional to the quantity

$$E\left[\left|\sum_{j=1}^{J} \boldsymbol{h}_{k,j}^T \hat{\boldsymbol{h}}_{k,j}^{(d)*} \mathbf{1}(b_{k,j})\right|^2\right] = \sum_{j=1}^{J} E\left[\left\|\boldsymbol{h}_{k,j}\right\|^2\right] E\left[\left|\boldsymbol{h}_{k,j}^{(d)H} \hat{\boldsymbol{h}}_{k,j}^{(d)}\right|^2\right] \mathbf{1}(b_{k,j}).$$

After defining the functions,

$$\Gamma(x) = \int_0^{+\infty} y^{x-1} e^{-y} \, dy \quad , \quad \beta(x,y) = \frac{\Gamma(x)\Gamma(y)}{\Gamma(x+y)} \quad ,$$

And after observing that $\|h_{k,j}\|^2$ is Erlang distributed with scale parameter M and rate parameter $\sigma_{k,j}^2$ and further considering assumption 3 regarding RVQ, the optimal bit allocation under the above constraints is the solution of the following combinatorial problem

$$\underset{\substack{b_{k,j} \in \{0,1,...,B\} \\ s.t.(1)}}{\arg\max} \sum_{j=1}^{J} M\sigma_{k,j}^2 \left(1 - 2^{b_{k,j}} \beta\left(2^{b_{k,j}}, \frac{M}{M-1}\right)\right) 1(b_{k,j})$$

which may, for example, be solved by an exhaustive search, such that the resultant $b_{k,j}$ may serve as a proposed distribution of bits $b_{k,j}$ within a number of available bits B for a transmission of a channel state information feedback.

According to the following second particular embodiment, it is still considered that MRT towards UE k is performed by each TP j such that $b_{k,j} > 0$. However, assumption 4 implies that phase difference between signals coming from different TPs are not compensated at UE k. This implication shall be disregarded and we assume that $\angle\left(\mathbf{h}_{k,j}^{(d)H} \hat{\mathbf{h}}_{k,j}^{(d)}\right) = \angle\left(\mathbf{h}_{k,i}^{(d)H} \hat{\mathbf{h}}_{k,i}^{(d)}\right), \forall j \neq i$. This assumption partially takes into account that in a real system the codewords are jointly selected at the UE.

We define $\Psi_{k,j} = E\left[\left\|\mathbf{h}_{k,j}\right\|\right]$ and $Y(b_{k,j}) = E\left[\left|\mathbf{h}_{k,j}^{(d)H} \hat{\mathbf{h}}_{k,j}^{(d)}\right|\right]$, whose expression can be computed using

$$\Psi_{k,j} = \int_0^{+\infty} \left(1 - F_{\|\mathbf{h}_{k,j}\|}(x)\right) dx = \frac{\sigma_{k,j}}{2} \sum_{m=0}^{M-1} \frac{1}{m!} \Gamma\left(m + \frac{1}{2}\right)$$

$$Y(b_{k,j}) = \int_0^{+\infty} \left(1 - F_{\left|h_{k,j}^{(d)H} \hat{h}_{k,j}^{(d)}\right|^2}(x^2)\right) dx = 1 - \sum_{r=0}^{2^{b_{k,j}}} \binom{2^{b_{k,j}}}{r}(-1)^r r(M-1)\beta\left(r(M-1), \frac{3}{2}\right)$$

The average SNR at UE k may now be written, except for a scaling factor, as

$$\sum_{j=1}^{J} E\left[\left\|h_{k,j}\right\|^2\right] E\left[\left|h_{k,j}^{(d)H} \hat{h}_{k,j}^{(d)}\right|^2\right] 1(b_{k,j}) + \sum_{j=1}^{J} \sum_{i=1,i\neq j}^{J} E\left[\left\|h_{k,j}\right\|\right] E\left[\left\|h_{k,i}\right\|\right] E\left[\left|h_{k,j}^{(d)H} \hat{h}_{k,j}^{(d)}\right|\right] E\left[\left|h_{k,i}^{(d)H} \hat{h}_{k,i}^{(d)}\right|\right] 1(b_{k,j}, b_{k,i})$$

and the optimal bit allocation turns out to be the solution of the following combinatorial problem:

$$\underset{\substack{b_{k,j} \in \{0,1,...,B\} \\ s.t.(1)}}{\arg\max} \sum_{j=1}^{J} M\sigma_{k,j}^2 \left(1 - 2^{b_{k,j}} \beta\left(2^{b_{k,j}}, \frac{M}{M-1}\right)\right) 1(b_{k,j}) + \sum_{j=1}^{J} \sum_{i=1,i\neq j}^{J} \Psi_{k,j} \Psi_{k,i} Y(b_{k,j}) Y(b_{k,i}) 1(b_{k,j}, b_{k,i})$$

The resultant $b_{k,j}$ may serve as a proposed distribution of bits $b_{k,j}$ within a number of available bits B for a transmission of a channel state information feedback. The results of an application of this particular embodiment to the environment illustrated in Fig. 3 are illustrated in Fig. 4, lower graph and may be utilized to spread the downlink transmission over more TPs as compared to the previous embodiment.

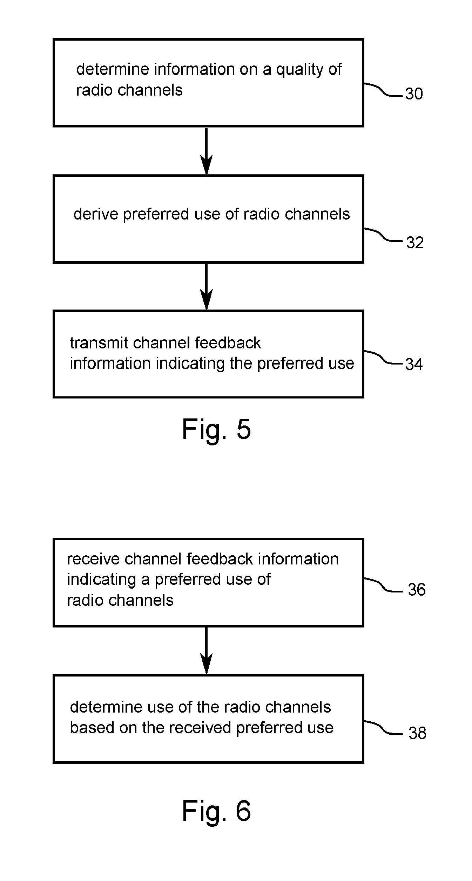

Fig. 5 shows a flow chart of an embodiment of a method for communicating with a first transmission point via a first radio channel and with a second transmission point via a second radio channel, the first transmission point and the second transmission point being members of set of transmission points used for measurements.

In a measurement step 30, an information on a quality of the first radio channel and of the second radio channel is determined.

In an evaluation step 32, the information on the quality of the first radio channel and of the second radio channel is evaluated to derive a preferred use of the first and second radio channels.

In a transmission step 34, a channel feedback information is transmitted to the first or to the second transmission point, the channel feedback information indicating the preferred use.

Fig 6 shows a flow chart of an embodiment of a method for coordinating a downstream transmission from a first transmission point and from a second transmission point to at least one mobile transceiver via a first radio channel and a second radio channel the first transmission point and the second transmission points being members of a set of transmission points used for measurements or transmission.

In a receiving step 36, a channel feedback information is received from the at least one mobile transceiver, the channel feedback information indicating a preferred use of the first and second radio channels.

In a determining step 38, the channel feedback information is evaluated to determine a use of the first and second radio channels based on the received preferred use.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. Apparatus (4) for a mobile transceiver (10; 24) for communicating with a first transmission point (2a) via a first radio channel (6a) and with a second transmission point (2b) via a second radio channel (6b), the first transmission point (2a) and the second transmission point (2b) being members of a set of transmission points used for measurements, the apparatus (4) comprising:

   a quality estimator (16) operable to determine information on a quality of the first radio channel (6a) and of the second radio channel (6b);
   an evaluator (12) operable to evaluate the information on the quality of the first radio channel (6a) and of the second radio channel (6b) to derive a preferred use of the first and second radio channels (6a, 6b); and
   a transmitter (16) operable to transmit a channel feedback information to the first or to the second transmission point (2a, 2b), the channel feedback information indicating the preferred use.

2. Apparatus (4) according to claim 1, wherein the transmitter (16) is further operable to transmit channel state information feedback on the quality of the first and of the second radio channels (6a, 6b), wherein the channel state information feedback is adapted to the preferred use.

3. Apparatus (4) according to claim 1, wherein the channel feedback information comprises information on a proposed distribution of bits within a number of available bits for a transmission of a channel state information feedback on the quality of the first and of the second radio channels (6a, 6b), the proposed distribution of bits indicating a first number of bits to be used to transmit the channel state information feedback for the first radio channel (6a) and a second number of bits to be used to transmit the channel state information feedback for the second radio channel (6b).

4. Apparatus (4) according to claim 3, wherein the channel state information feedback includes a precoding matrix indicator (PMI) indicating a preferred precoding matrix for a downstream transmission over each of the first and second radio channels (6a, 6b) and a channel quality indicator (CQI) indicating a preferred modulation and coding scheme for a downstream transmission over the first and second channels (6a, 6b) and wherein the channel feedback information indicates the distribution of bits for the transmission of the preferred precoding matrix indicator only.

5. Apparatus (4) according to claim 3, wherein the first number of bits is higher when the first radio channel (6a) has a determined better quality and wherein the second number of bits is higher when the second radio channel (6b) has a determined better quality.

6. Apparatus (4) according to claim 1, wherein the channel feedback information indicates a proposal for a combined transmission via the first and the second radio channels (6a, 6b) or a proposal to exclude the first or the second transmission point (2a, 2b) from a set of transmission points used for transmission.

7. Apparatus (4) according to claim 3, wherein the channel feedback information indicates a codebook used to transmit the channel state information feedback for each transmission point (2a, 2b), the codebooks being chosen such that a higher number of bits are used to indicate codewords for a radio channel having a determined better quality.

8. Apparatus (4) according to claim 1, wherein the preferred use is chosen such that an averaged quality criterion is above a quality threshold, the averaged quality criterion being determined for a downstream transmission over the first and second radio channels (2a, 2b) assuming the preferred use.

9. Apparatus (8) for coordinating a downstream transmission from a first transmission point (2a) and from a second transmission point (2b) to at least one mobile transceiver (10) via a first radio channel (6a) and a second radio channel (6b), the first transmission point (2a) and the second transmission point (2b) being members of set of transmission points used for measurements or transmission, the apparatus (8) comprising:

   a receiver (18) operable to receive a channel feedback information from the at least one mobile transceiver (10), the channel feedback information indicating a preferred use of the first and second radio channels (6a, 6b); and
   a scheduler (20) operable to evaluate the channel feedback information and to determine a use of the first and

second radio channels (6a, 6b) based on the received preferred use.

10. The Apparatus (8) of claim 9, wherein the receiver (18) is further operable to receive channel state information feedback on the quality of the first and of the second radio channel, wherein the channel state information feedback is adapted to the preferred use.

11. Apparatus (8) according to claim 9, wherein the receiver (18) is further operable to receive a channel feedback information comprising information on a proposed distribution of bits within a number of available bits for a transmission of a channel state information feedback, the channel state information feedback having information on the quality of the first and of the second radio channels, the proposed distribution of bits indicating a first number of bits to be used to transmit the channel state information feedback for the first channel and a second number of bits to be used to transmit the channel state information feedback for the second channel; and
wherein the scheduler is operable to determine the use of the first and second radio channels such that a transmission point is excluded from a set of transmission points used for transmission when its associated proposed number of bits is below a quality threshold.

12. Apparatus (8) according to claim 9, further comprising a transmitter operable to transmit a selection information, the selection information indicating a further criterion to be applied for selecting the transmission points included in the set of transmission points used for measurements and/or for the selected transmission points proposed for the set of transmission points used for transmission.

13. Method for communicating with a first transmission point (2a) via a first radio channel (6a) and with a second transmission point (2b) via a second radio channel (6b), the first transmission point (2a) and the second transmission point (2b) being members of set of transmission points used for measurements, the method comprising:

determining information on a quality of the first radio channel and of the second radio channel;
evaluating the information on the quality of the first radio channel and of the second radio channel to derive a preferred use of the first and second radio channels (6a, 6b); and
transmitting a channel feedback information to the first or to the second transmission point (2a, 2b), the channel feedback information indicating the preferred use.

14. Method for coordinating a downstream transmission from a first transmission point (2a) and from a second transmission point (2b) to at least one mobile transceiver (10) via a first radio channel and a second radio channel, the first transmission point and the second transmission points being members of a set of transmission points used for measurements or transmission, the method comprising:

receiving a channel feedback information from the at least one mobile transceiver (10), the channel feedback information indicating a preferred use of the first and second radio channels (6a, 6b); and
evaluating the channel feedback information to determine a use of the first and
second radio channels (6a, 6b) based on the received preferred use.

15. A computer program having a program code for performing the method of claims 13 or 14 when the computer program is executed on a computer or processor.

Fig. 1

Fig. 2

Fig. 3

Fig. 4

```
┌─────────────────────────────────────┐
│ determine information on a quality of │
│ radio channels                        │── 30
└─────────────────────────────────────┘
                    │
                    ▼
┌─────────────────────────────────────┐
│ derive preferred use of radio channels│
│                                       │── 32
└─────────────────────────────────────┘
                    │
                    ▼
┌─────────────────────────────────────┐
│ transmit channel feedback             │
│ information indicating the preferred use│── 34
└─────────────────────────────────────┘
```

## Fig. 5

```
┌─────────────────────────────────────┐
│ receive channel feedback information  │
│ indicating a preferred use of         │── 36
│ radio channels                        │
└─────────────────────────────────────┘
                    │
                    ▼
┌─────────────────────────────────────┐
│ determine use of the radio channels   │
│ based on the received preferred use   │── 38
└─────────────────────────────────────┘
```

## Fig. 6

Europäisches
Patentamt
European
Patent Office
Office européen
des brevets

**EUROPEAN SEARCH REPORT**

Application Number

EP 12 30 5282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/103503 A1 (SHIN WON-JAE [KR] ET AL) 5 May 2011 (2011-05-05)<br>* abstract *<br>* paragraph [0016] - paragraph [0022] *<br>* paragraph [0024] *<br>* paragraph [0044] - paragraph [0046] *<br>* paragraph [0049] - paragraph [0054] *<br>* paragraph [0067] - paragraph [0075] *<br>* paragraph [0087] - paragraph [0096] *<br>* figures 2, 3, 6 * | 1-15 | INV.<br>H04W24/10<br>H04B7/02 |
| X<br><br>A | US 2011/013710 A1 (XIAO WEIMIN [US])<br>20 January 2011 (2011-01-20)<br><br>* abstract *<br>* paragraph [0004] - paragraph [0009] *<br>* paragraph [0011] - paragraph [0013] *<br>* paragraph [0024] - paragraph [0027] *<br>* paragraph [0031] - paragraph [0040] *<br>* paragraph [0042] - paragraph [0043] *<br>* paragraph [0045] - paragraph [0046] *<br>* paragraph [0050] - paragraph [0051] *<br>* figures 2, 3 * | 1,2,6,<br>8-10,<br>12-15<br>3-5,7,11 | |
| X<br><br>A | WO 2011/150250 A1 (QUALCOMM INC [US]; BRUECK STEFAN [DE]; DEKORSY ARMIN [DE])<br>1 December 2011 (2011-12-01)<br>* abstract *<br>* paragraph [0055] - paragraph [0060] *<br>* paragraph [0068] - paragraph [0070] *<br>* paragraph [0078] *<br>* paragraph [0089] *<br>* paragraph [0092] - paragraph [0095] * | 1,9,<br>13-15<br>2-8,<br>10-12 | TECHNICAL FIELDS SEARCHED (IPC)<br><br>H04W<br>H04B |

-/--

The present search report has been drawn up for all claims

| Place of search | Date of completion of the search | Examiner |
|---|---|---|
| Munich | 14 June 2012 | Lombardi, Giuseppe |

EPO FORM 1503 03.82 (P04C01)

**Europäisches Patentamt**

**European Patent Office**

**Office européen des brevets**

## EUROPEAN SEARCH REPORT

Application Number

EP 12 30 5282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/055238 A1 (MARVELL WORLD TRADE LTD [BB]; GOMADAM KRISHNA SRIKANTH [US]; ERELL ADO) 12 May 2011 (2011-05-12) <br> * abstract * <br> * paragraph [0008] - paragraph [0010] * <br> * paragraph [0019] - paragraph [0021] * <br> * paragraph [0029] - paragraph [0031] * <br> * paragraph [0035] - paragraph [0041] * <br> ----- | 3-5,7,11 | |

TECHNICAL FIELDS
SEARCHED       (IPC)

The present search report has been drawn up for all claims

| Place of search | Date of completion of the search | Examiner |
|---|---|---|
| Munich | 14 June 2012 | Lombardi, Giuseppe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 30 5282

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2012

| Patent document cited in search report | Publication date | Patent family member(s) | Publication date |
|---|---|---|---|
| US 2011103503 A1 | 05-05-2011 | KR 20110048226 A<br>US 2011103503 A1 | 11-05-2011<br>05-05-2011 |
| US 2011013710 A1 | 20-01-2011 | US 2011013710 A1<br>WO 2011006451 A1 | 20-01-2011<br>20-01-2011 |
| WO 2011150250 A1 | 01-12-2011 | US 2011294527 A1<br>WO 2011150250 A1 | 01-12-2011<br>01-12-2011 |
| WO 2011055238 A1 | 12-05-2011 | US 2011110450 A1<br>WO 2011055238 A1 | 12-05-2011<br>12-05-2011 |

EPO FORM P0459

For more details about this annex : see Official Journal of the European Patent Office, No. 12/82